# EUROPEAN PATENT SPECIFICATION

(11) **EP 2 662 602 B1**
(45) Date of publication and mention of the grant of the patent: **17.09.2014**
(21) Application number: 13167224.8
(22) Date of filing: 10.05.2013
(51) Int. Cl.: F16K 11/087, F16K 27/06

(54) **Improved bypass valve**
Verbessertes Bypassventil
Vanne de dérivation améliorée

(30) Priority: 11.05.2012 IT VI20120109
(43) Date of publication of application: 13.11.2013
(73) Proprietor: Mut Meccanica Tovo S.p.A., 36075 Montecchio Maggiore (VI) (IT)
(72) Inventor: Tovo, Lino, 36075 Montecchio Maggiore (VI) (IT); Facchin, Roberto, 36078 Valdagno (VI) (IT); Mattiello, Michele, 36023 Longare (VI) (IT)
(74) Representative: Bonini, Ercole

(56) References cited:
- GB-A- 1 376 202
- US-A1- 2007 068 584
- US-A1- 2009 114 169

## Description

The invention concerns a bypass valve of the improved type.

It is known that bypass valves are used in systems with a fluid circulating therein, when it is necessary to prevent the fluid from flowing through a piece of equipment or a part of the system.

Bypass valves comprise a valve body substantially in the shape of a T, in which it is possible to identify an inlet way and an outlet way defining the main flow direction respectively in and out of the valve and a bypass way defining the bypass direction that is orthogonal to the main direction.

Inside the valve body there is a manifold chamber in which the valve ways converge and which houses shutter means operated manually or through power means that open and close the outlet and bypass ways according to the needs of the system.

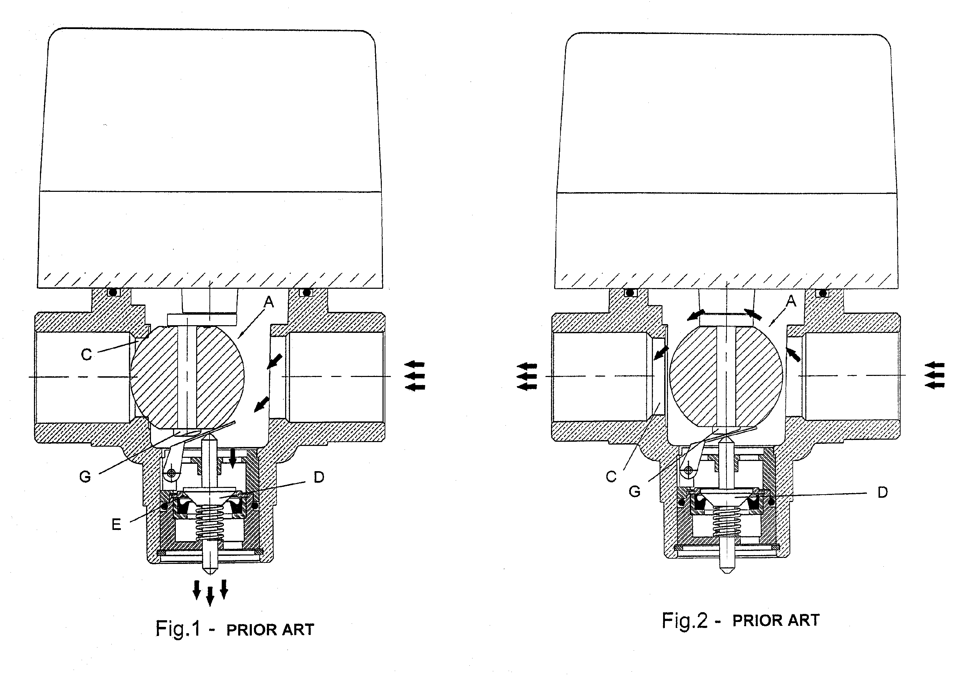

According to a known embodiment illustrated in Figures 1 and 2, the shutter means comprise a ball shutter **A** associated with moving means that move it alternately in such a way as to open and close the outlet mouth **C** and a conical shutter **D** that is operated by the ball shutter and opens and closes the bypass mouth **E** when the ball shutter **A** respectively closes and opens the outlet mouth.

In particular, the ball shutter **A** is provided with counteracting means **G** that cooperate with the conical shutter **D** so that when the power means arrange the ball shutter **A** so that it closes the outlet mouth **C** as shown in Figure 1, the conical shutter **D** opens the bypass mouth **E.**

Vice versa, when the power means arrange the ball shutter **A** so that it opens the outlet mouth **C** as shown in Figure 2, the conical shutter closes the bypass mouth **E.**

Valves of this type pose the drawback that they are expensive to manufacture due to the presence of the two shutters and of the respective mechanisms. Another drawback is represented by their considerable overall dimensions.

A further drawback lies in that the presence of the conical shutter and its mechanisms on the bypass way increases flow resistance and slows the fluid flow down.

Finally, the presence of the two shutters and of the respective mechanisms reduces the operating reliability of the valve.

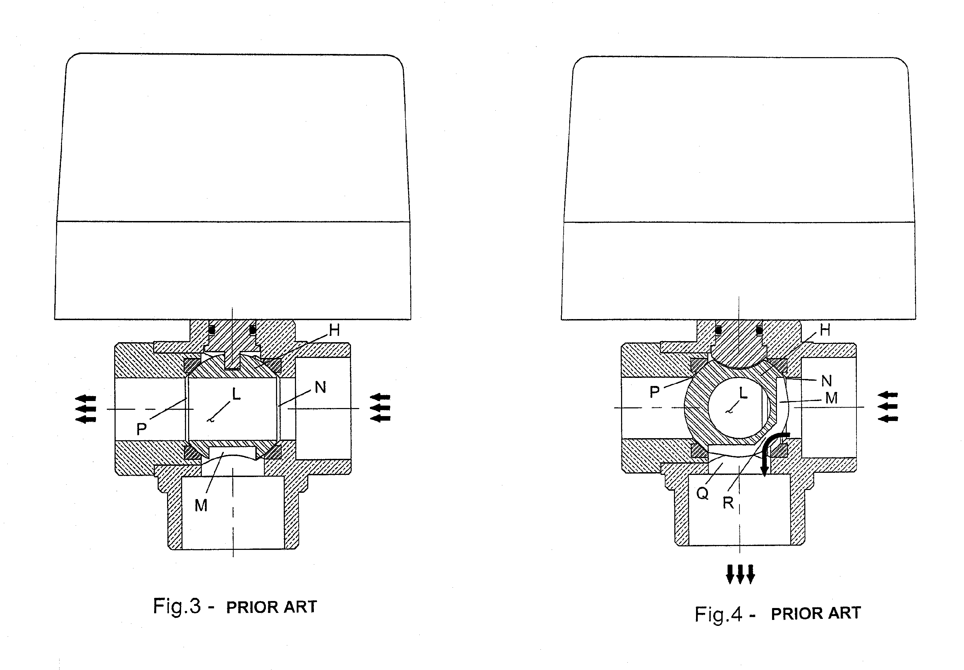

Bypass valves of the type shown in Figures 3 and 4 are also known, wherein the ball shutter **H** is provided with a through duct **L** and with a shaped bevel **M** created in the body of the shutter in a position substantially orthogonal to the direction defined by the through duct **L.**

The shutter is associated with manual or motorised moving means that rotate it from a flow position, shown in Figure 3, in which the through duct **L** places the inlet mouth **N** in communication with the outlet mouth **P** and the shaped bevel **M** is directed towards the bypass mouth **Q,** to a bypass position, shown in Figure 4, in which the shaped bevel **M** places the inlet mouth **N** in communication with the bypass mouth **Q** and the through duct **L** is directed towards the valve body.

Valves of this type offer the advantage of having reduced overall dimensions and lower production costs compared to the bypass valves mentioned above. Furthermore, said valves offer higher operating reliability than the bypass valves mentioned above.

Said bypass valves, however, pose the drawback that the bypass duct **R** is defined between the shaped bevel **M** and the valve body and features limited cross section and a winding configuration that causes flow resistance and slows the flow down.

Furthermore, the bypass valves mentioned above, in both of the embodiments described, pose the drawback that they do not allow the flow rate of the fluid being bypassed to be regulated.

Other bypass valves are described for example in documents GB 1376202, US 2009/0114169 or US 2007/0068584.

The present invention intends to overcome the limitations and drawbacks described above.

In particular, it is a first object of the invention to provide a bypass valve that has reduced flow resistance compared to the bypass valves of the known type. It is another object of the invention to provide a bypass valve that is easier to manufacture than the bypass valves of the known type.

It is a further object of the invention to provide a bypass valve that, compared to the bypass valves of the known type, offers higher operating reliability.

It is another, yet not the least object of the invention, to provide a bypass valve that also allows the flow rate of the fluid being bypassed to be regulated.

The objects described above are achieved by a valve having the characteristics described in the main claim, to which the reader should refer.

Further characteristics of the invention are described in the dependent claims.

In the valve that is the subject of the invention the manifold chamber and the bypass duct have a configuration that advantageously, compared to the known bypass valves, considerably improves the flow when the valve is in the bypass position.

Advantageously, therefore, the bypass valve of the invention offers better performance than the known valves.

Furthermore, the valve of the invention is less expensive to manufacture and offers more reliable operation.

The objects and advantages described above will be highlighted in greater detail in the description of a preferred embodiment of the valve of the invention that is supplied as an indicative, non-limiting example with reference to the enclosed drawings, wherein:
- Figures from 1 to 4 show bypass valves of the known type;
- Figure 5 shows a longitudinal sectional view of the valve of the invention, in the position in which the flow develops from the inlet way towards the outlet way;
- Figure 6 shows the valve of Figure 5 in the bypass position;
- Figure 7 shows a construction variant of the valve of Figure 6.

The bypass valve of the invention is shown in the longitudinal sectional views of Figures from 5 to 7, where it is indicated as a whole by **1.**

It can be observed that it comprises a valve body **2** in which it is possible to identify a manifold chamber **3** with three ducts branching off, said ducts being substantially arranged at right angles. The ducts and the bypass valve are thus configured so as to define a substantially T-shaped profile.

In particular, it is possible to identify an inlet duct **4** provided with an inlet way **4a** suited to be connected to a feed pipe and with an inlet mouth **4b** communicating with the manifold chamber **3** and an outlet duct **5** provided with an outlet way **5a** suited to be connected to a delivery pipe and an outlet mouth **5b** communicating with the manifold chamber **3.**

The outlet mouth **5b** is positioned downstream of the inlet mouth **4b,** with reference to the flow direction indicated by the arrow **F**, which develops between the inlet duct **4** and the outlet duct **5** defining the direction **X**.

It is also possible to identify a bypass duct **6** that is provided with a bypass way **6a** suited to be connected to a bypass pipe and with a bypass mouth **6b** that communicates with the manifold chamber **3**.

Inside the manifold chamber **3** there are the shutter means **7** suited to open and close the outlet mouth **5b** and the bypass mouth that are connected to the overlying moving means **8** applied to the outside of the valve body **2** through known fixing means.

According to the invention, the outlet mouth **5b** and the bypass mouth **6b** are arranged in front of each other on opposite sides of the shutter means **7.** Furthermore, the outlet mouth **5b** and the bypass mouth **6b** are also coaxial with each other.

In particular, the shutter means **7** comprise a spherical shutter **9** that is provided with eccentric means **10** for connection to the moving means **8.**

Said eccentric means **10,** as can be observed, in turn comprise a shaft **11** associated with the spherical shutter **9** and a pin **12** associated with the moving means **8,** the shaft **11** and the pin **12** being spaced from each other and fixed to a centre body **13.**

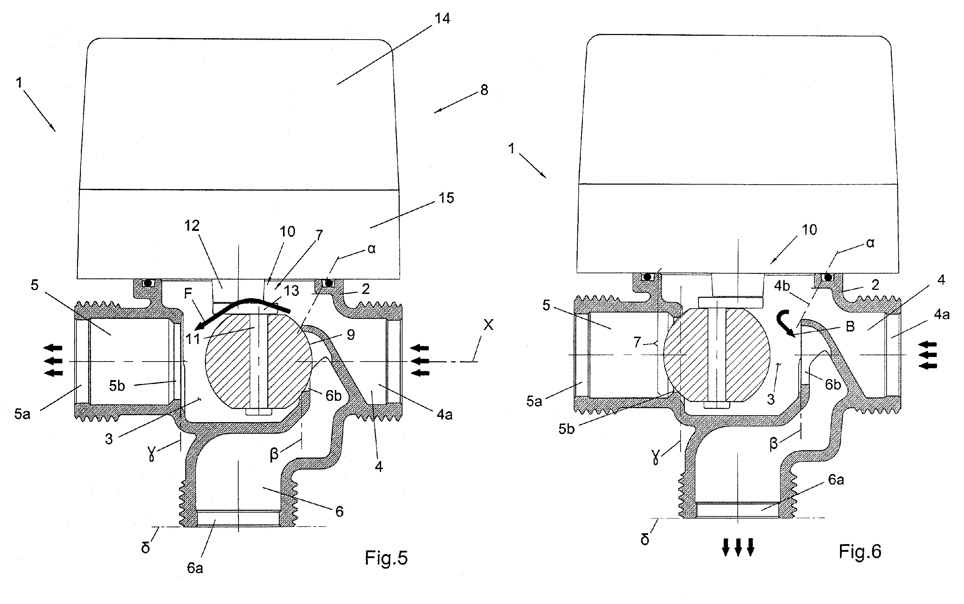

In this way, the eccentric means **10** substantially define a crank that, when set rotating by the moving means **8,** moves the spherical shutter **9** from the position shown in Figure 6, in which it closes the outlet mouth **5b,** to the position in which, as shown in Figure 5, it closes the bypass mouth **6b.**

It can also be observed that the inlet mouth **4b** is positioned above the bypass mouth **6b** and lies on a plane α that is incident on the plane β on which the bypass mouth **6b** lies.

It can finally be observed that the outlet mouth **5b** lies on a plane γ that is parallel to the plane β on which the bypass mouth **6b** lies.

Finally, the moving means **8** comprise a motor **14,** preferably but not necessarily of the electric type, and spring means **15** of the known type that are mechanically cooperating with each other and are associated with the shutter **9** through said eccentric means **10.**

It should be stressed that the moving means **8** are of the type known per se, wherein the motor **14** operates the valve **1** so as to arrange it in flow position or bypass position according to the command received from an electronic control unit that is not shown in the drawings.

Vice versa, the spring means **15** substantially serve as safety members to automatically arrange the spherical shutter **9** so that it closes the outlet mouth **5b** and thus to position the valve **1** so that it bypasses the flow in case of interruption of power supply to the motor **14.**

The latter, as already explained, is preferably an electric motor but in a different embodiment also a fluid-operated motor, for example an air-operated motor, could be used.

The special embodiment of the valve **1** of the invention just described above allows all the set objects to be achieved and all the limitations of the bypass valves of the known type to be overcome.

In particular, with reference to Figure 5, it is possible to observe that, since the inlet mouth **4b** is positioned above the bypass mouth **6b** and both of them are arranged on the same side of the spherical shutter **9,** the bypass flow indicated by the arrow **B** between the inlet mouth **4b** and the bypass mouth **6b** develops without being interrupted by the presence of flow disturbing elements.

In particular, it should be noted that the bypass flow **B** visible in Figure 6 does not involve and does not hit the spherical shutter **9** and this makes it possible to reduce flow resistance compared to the known bypass valves in which, vice versa, the bypass flow hits the shutter.

Furthermore, as the bypass mouth **6b** is arranged in front of and coaxial with the outlet mouth **5b** and is arranged on the same side as the inlet mouth **4b,** contrary to the known embodiments, the manifold chamber **3** has a larger useful volume than the known bypass valves and also this aspect improves the flow conditions through the valve.

Finally, as the bypass way **6a** lies both on a plane δ orthogonal to the plane β on which the bypass mouth **6b** lies, in the valve body **2** it is possible to create the shaped bypass duct **6,** in which a tap **18** can usefully be housed. Compared to the valves of the known type, this advantageously makes it possible to regulate the bypass flow between a maximum value when the tap **18** is completely open and a minimum value when the tap **18** is completely closed.

Finally, the simplicity of the eccentric means **10** that connect the spherical shutter **9** to the moving means **8** makes the construction of the valve **1** of the invention easier than the construction of the valves of the known type and its operation more reliable.

In practice, when the valve **1** of the invention is arranged in the configuration shown in Figure 5, the spherical shutter **9** closes the bypass mouth **6b** and the flow **F** develops between the inlet way **4a** and the outlet way **5a** according to the flow direction **X** defined by the inlet duct **4** and the outlet duct **5.** Obviously, in this situation there is no flow through the bypass duct **6,** whose bypass mouth **6b** is closed by the spherical shutter **9.**

Vice versa, when the valve **1** is arranged in the configuration shown in Figure 6, in which the spherical shutter **9** closes the outlet mouth **5b,** it is in the bypass position and the flow coming in through the inlet way **4a** enters the manifold chamber **3** through the inlet mouth **4b** and passing through the bypass mouth **6b** runs through the bypass duct **6** and flows out through the bypass way **6a** according to the direction indicated by the arrow **B.**

It should be noted that there are no hindrances to the incoming flow of the fluid in the bypass duct **6** through the bypass mouth **6b,** as the considerable volume of the manifold chamber **3,** included between the bypass mouth **6b** and the spherical shutter **9,** allows the stabilisation of a regular flow that is not hindered by the presence of the shutter mechanisms as instead occurs in the bypass valves of the known type.

In fact, the manifold chamber **3** is always filled with the fluid coming from the inlet mouth **4b** and flowing spontaneously through the bypass mouth **6b** without being subjected to obstacles of any type.

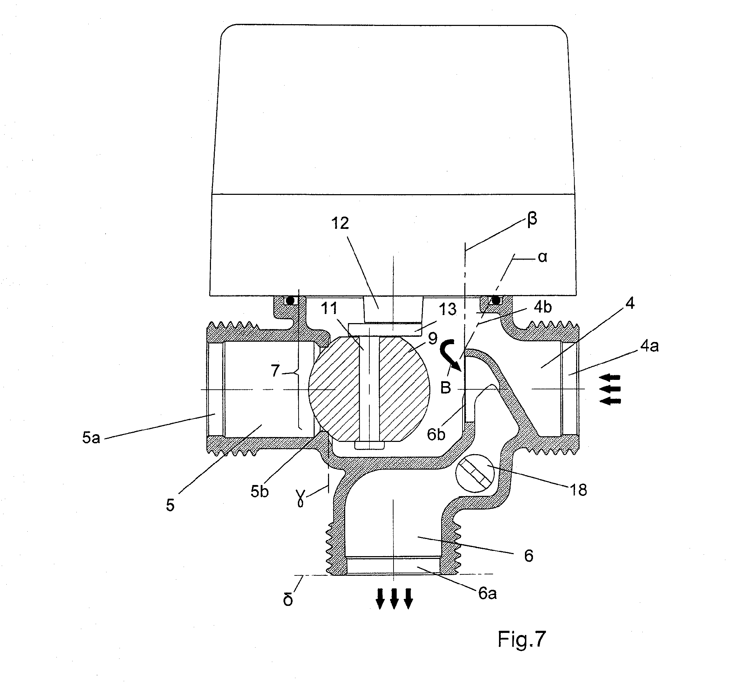

A variant embodiment of the invention is shown in Figure 7, in which the valve of the invention is arranged in the bypass position and is provided with a tap **18** inserted in the bypass duct **6** to adjust the flow rate of the bypass flow. Obviously, by closing the tap **18** completely it is possible to block the bypass flow completely, even if the valve is arranged in the bypass position.

On the basis of the above, it can be understood that the bypass valve that is the subject of the invention achieves all the set objects.

In the construction stage variants of the valve of the invention may be made, which are neither described herein not illustrated in the drawings.

For example, a different embodiment of the invention that is neither described herein nor shown in the drawings may include means for moving the spherical shutter made in a different way than described and illustrated above or may also include the replacement of the shutter with another shutter having a different profile or, in any case, with a different type of shutter.

It is understood, however, that said construction variants, neither described nor illustrated herein, must all be considered protected by the present patent, provided that they fall within the scope of the claims expressed below.

Where technical features mentioned in any claim are followed by reference signs, those reference signs have been included for the sole purpose of increasing the intelligibility of the claims and accordingly such reference signs do not have any limiting effect on the protection of each element identified by way of example by such reference signs.

## Claims

1. Bypass valve (1) comprising a valve body (2) in which it is possible to identify:
- a manifold chamber (3);
- an inlet duct (4) provided with an inlet way (4a) suited to be connected to a feed pipe and with an inlet mouth (4b) communicating with said manifold chamber (3);
- an outlet duct (5) provided with an outlet way (5a) suited to be connected to a delivery pipe and with an outlet mouth (5b) communicating with said manifold chamber (3) and located downstream of said inlet mouth (4b) according to the flow (F) along the direction (X) defined by said inlet duct (4) and said outlet duct (5);
- a bypass duct (6) provided with a bypass way (6a) suited to be connected to a bypass pipe and with a bypass mouth (6b) communicating with said manifold chamber (3);
- shutter means (7) provided in said manifold chamber (3) for opening/ closing at least said outlet mouth and at least said bypass mouth;
- moving means (8) connected to said shutter means,
**characterized in that** said outlet mouth (5b) and said bypass mouth (6b) are arranged in front of each other.

2. Bypass valve (1) according to claim 1), **characterized in that** said outlet mouth (5b) and said bypass mouth (6b) are coaxial with each other.

3. Bypass valve (1) according to any of the preceding claims, **characterized in that** said outlet mouth (5b) and said bypass mouth (6b) are arranged on opposite sides of said shutter means (7).

4. Bypass valve (1) according to any of the preceding claims, **characterized in that** said bypass way (6a) lies on a plane (γ) that is orthogonal to the plane (β) on which said bypass mouth (6b) lies.

5. Bypass valve (1) according to any of the preceding claims, **characterized in that** said inlet mouth (4b) is located above said bypass mouth (6b).

6. Bypass valve (1) according to any of the preceding claims, **characterized in that** said inlet mouth (4b) lies on a plane (α) that is incident on the plane (β) on which said bypass mouth (6b) lies.

7. Bypass valve (1) according to any of the preceding claims, **characterized in that** said outlet mouth (5b) lies on a plane (γ) that is parallel to the plane (β) on which said bypass mouth (6b) lies.

8. Bypass valve (1) according to any of the preceding claims, **characterized in that** said moving means (8) comprise a motor (14) and spring means (15) mechanically cooperating with each other and associated with said shutter means (7).

9. Bypass valve (1) according to any of the preceding claims, **characterized in that** said shutter means (7) comprise a spherical shutter (9) provided with eccentric means (10) for connection to said moving means (8).

10. Bypass valve (1) according to claim 9), **characterized in that** said eccentric means (10) comprise a shaft (11) associated with said spherical shutter (9) and a pin (12) associated with said moving means (8), said shaft (11) and said pin (12) being spaced from each other and fixed to a centre body (13) in such a way as to define a crank.

11. Bypass valve (1) according to any of the preceding claims, **characterized in that** it comprises a tap (18) for regulating the flow, arranged in said bypass duct (6) upstream of said bypass way (6a) and downstream of said bypass mouth (6b) according to said bypass flow (B).

## Patentansprüche

1. Bypassventil (1), einen Ventilkörper (2) umfassend, in dem Folgendes identifiziert werden kann:
- eine Verteilerkammer (3);
- eine Einlassleitung (4) mit einem Einlassweg (4a), der geeignet ist, an ein Zuflussrohr angeschlossen zu werden und mit einer Einlassöffnung (4b), die mit der besagten Verteilerkammer (3) kommuniziert;
- eine Auslassleitung (5) mit einem Auslassweg (5a), der geeignet ist, an ein Ausgaberohr angeschlossen zu werden und mit einer Auslassöffnung (5b), die mit der besagten Verteilerkammer (3) kommuniziert und stromabwärts der besagten Einlassöffnung (4b) positioniert ist gemäß des Flusses (F) entlang der Richtung (X), die durch die besagte Einlassleitung (4) und die besagte Auslassleitung (5) definiert wird;
- eine Bypassleitung (6) mit einem Bypassweg (6a), der geeignet ist, an ein Bypassrohr angeschlossen zu werden und mit einer Bypassöffnung (6b), die mit der besagten Verteilerkammer (3) kommuniziert;
- Verschlussmittel (7) in der besagten Verteilerkammer (3) zum Öffnen/Schließen von wenigstens der besagten Auslassöffnung und wenigstens der besagten Bypassöffnung;
- an die besagten Verschlussmittel angeschlossene Bewegungsmittel (8), **dadurch gekennzeichnet, dass** die besagte Auslassöffnung (5b) und die besagte Bypassöffnung (6b) einander gegenüber angeordnet sind.

2. Bypassventil (1) gemäß Patentanspruch 1), **dadurch gekennzeichnet, dass** die besagte Auslassöffnung (5b) und die besagte Bypassöffnung (6b) koaxial zueinander stehen.

3. Bypassventil (1) gemäß eines jeden der vorstehenden Patentansprüche, **dadurch gekennzeichnet, dass** die besagte Auslassöffnung (5b) und die besagte Bypassöffnung (6b) an gegenüberliegenden Seiten der besagten Verschlussmittel (7) angeordnet sind.

4. Bypassventil (1) gemäß eines jeden der vorstehenden Patentansprüche, **dadurch gekennzeichnet, dass** der besagte Bypassweg (6a) auf einer Ebene (γ) liegt, die orthogonal zur Ebene (β) steht, auf welcher die besagte Bypassöffnung (6b) liegt.

5. Bypassventil (1) gemäß eines jeden der vorstehenden Patentansprüche, **dadurch gekennzeichnet, dass** sich die besagte Einlassöffnung (4b) oberhalb der besagten Bypassöffnung (6b) befindet.

6. Bypassventil (1) gemäß eines jeden der vorstehenden Patentansprüche, **dadurch gekennzeichnet, dass** die besagte Einlassöffnung (4b) auf einer Ebene (α) liegt, die auf die Ebene (β) einfällt, auf welcher die besagte Bypassöffnung (6b) liegt.

7. Bypassventil (1) gemäß eines jeden der vorstehenden Patentansprüche, **dadurch gekennzeichnet, dass** die besagte Auslassöffnung (5b) auf einer Ebene (γ) liegt, die parallel zur Ebene (β) liegt, auf welcher die besagte Bypassöffnung (6b) liegt.

8. Bypassventil (1) gemäß eines jeden der vorstehenden Patentansprüche, **dadurch gekennzeichnet, dass** die besagten Bewegungsmittel (8) einen Motor (14) umfassen sowie Federmittel (15), die mechanisch miteinander zusammenarbeiten und mit den besagten Verschlussmitteln (7) verbunden sind.

9. Bypassventil (1) gemäß eines jeden der vorstehenden Patentansprüche, **dadurch gekennzeichnet, dass** die besagten Verschlussmittel (7) einen Kugelverschluss (9) umfassen, der Exzentermittel (10) zur Verbindung mit den besagten Bewegungsmitteln (8) umfasst.

10. Bypassventil (1) gemäß Patentanspruch 9), **dadurch gekennzeichnet, dass** die besagtem Exzentermittel (10) eine Welle (11) umfassen, die dem besagten Kugelverschluss (9) verbunden sind, und einen Zapfen (12), der mit den besagten Bewegungsmitteln (8) verbunden ist, wobei die besagte Welle (11) und der besagte Zapfen (12) voneinander entfernt und an einem zentralen Körper (13) befestigt sind, so dass sie eine Kurbel definieren.

11. Bypassventil (1) gemäß eines jeden der vorstehenden Patentansprüche, **dadurch gekennzeichnet, dass** sie einen Hahn (18) zur Regulierung des Flusses umfassen, welcher in der besagten Bypassleitung (6) gemäß des besagten Bypassflusses (B) stromaufwärts des besagten Bypasswegs (6a) und stromabwärts der besagten Bypassöffnung (6b) angeordnet ist.

## Revendications

1. Soupape de by-pass (1) comprenant un corps de soupape (2) dans lequel se situent:
- une chambre collectrice (3);
- un conduit d'entrée (4) doté d'une voie d'entrée (4a) apte à être reliée à un tuyau d'alimentation et d'une bouche d'entrée (4b) communiquant avec ladite chambre collectrice (3);
- un conduit de sortie (5) doté d'une voie de sortie (5a) apte à être reliée à un tuyau de refoulement et d'une bouche de sortie (5b) communiquant avec ladite chambre collectrice (3) et positionnée en aval de ladite bouche d'entrée (4b) selon le flux (F) le long de la direction (X) définie par ledit conduit d'entrée (4) et ledit conduit de sortie (5);
- un conduit de by-pass (6) doté d'une voie de by-pass (6a) apte à être reliée à un tuyau de by-pass et d'une bouche de bypass (6b) communiquant avec ladite chambre collectrice (3);
- des moyens d'obturation (7) présents dans ladite chambre collectrice (3) pour l'ouverture/fermeture au moins de ladite bouche de sortie et au moins de ladite bouche de by-pass;
- des moyens de déplacement (8) reliés auxdits moyens d'obturation, **caractérisée en ce que** ladite bouche de sortie (5b) et ladite bouche de bypass (6b) sont disposées une en face de l'autre.

2. Soupape de by-pass (1) selon la revendication 1), **caractérisée en ce que** ladite bouche de sortie (5b) et ladite bouche de by-pass (6b) sont coaxiales entre elles.

3. Soupape de by-pass (1) selon l'une quelconque des revendications précédentes, **caractérisée en ce que** ladite bouche de sortie (5b) et ladite bouche de by-pass (6b) sont disposées sur des côtés opposés desdits moyens d'obturation (7).

4. Soupape de by-pass (1) selon l'une quelconque des revendications précédentes, **caractérisée en ce que** ladite voie de by-pass (6a) se trouve sur un plan (γ) orthogonal au plan (β) sur lequel appartient ladite bouche de by-pass (6b).

5. Soupape de by-pass (1) selon l'une quelconque des revendications précédentes, **caractérisée en ce que** ladite bouche d'entrée (4b) est positionnée au-dessus de ladite bouche de by-pass (6b).

6. Soupape de by-pass (1) selon l'une quelconque des revendications précédentes, **caractérisée en ce que** ladite bouche d'entrée (4b) se trouve sur un plan (α) incident sur le plan (β) sur lequel se trouve ladite bouche de by-pass (6b).

7. Soupape de by-pass (1) selon l'une quelconque des revendications précédentes, **caractérisée en ce que** ladite bouche de sortie (5b) se trouve sur un plan (γ) parallèle au plan (β) sur lequel se trouve ladite bouche de by-pass (6b).

8. Soupape de by-pass (1) selon l'une quelconque des revendications précédentes, **caractérisée en ce que** lesdits moyens de déplacement (8) comprennent un moteur (14) et des moyens à ressort (15) mécaniquement coopérant entre eux et associés auxdits moyens d'obturation (7).

9. Soupape de by-pass (1) selon l'une quelconque des revendications précédentes, **caractérisée en ce que** lesdits moyens d'obturation (7) comprennent un obturateur sphérique (9) doté de moyens excentriques (10) de connexion auxdits moyens de déplacement (8).

10. Soupape de by-pass (1) selon la revendication 9), **caractérisée en ce que** lesdits moyens excentriques (10) comprennent un arbre (11) associé audit obturateur sphérique (9) et un pivot (12) associé audits moyens de déplacement (8), ledit arbre (11) et ledit pivot (12) étant espacés entre eux et fixés à un corps central (13) de façon à définir une manivelle.

11. Soupape de by-pass (1) selon l'une quelconque des revendications précédentes, **caractérisée en ce qu'**elle comprend un robinet (18) pour le réglage du flux, disposé dans ledit conduit de by-pass (6) en amont de ladite voie de by-pass (6a) et en aval de ladite bouche de by-pass (6b) selon ledit débit de by-pass (B).
